# EUROPÄISCHE PATENTANMELDUNG

(11) **EP 4 534 225 A1**
(43) Veröffentlichungstag der Anmeldung: **09.04.2025**
(21) Anmeldenummer: 23201542.0
(22) Anmeldetag: 04.10.2023
(51) Int. Cl.: B23B 39/00, B23Q 11/00, B25H 1/00

(54) **STANDWERKZEUGMASCHINE**

(71) Anmelder: C. & E. Fein GmbH, 73529 Schwäbisch-Gmünd-Bargau (DE)
(72) Erfinder: Denzel, Sergej, 73527 Schwäbisch Gmünd (DE); Scherrenbacher, Stefan, 73550 Waldstetten (DE)
(74) Vertreter: Wallinger, Michael

(57) **Zusammenfassung**

Standwerkzeugmaschine (100) zur spanenden Bearbeitung, insbesondere Kernbohrmaschine, aufweisend einen Werkzeugständer (12) mit einem ersten Werkzeugständergehäuseinnenraum (14), ein einen Magneten (16) beinhaltendes Spanleitsystem, wobei der Magnet (16) in dem ersten Werkzeugständergehäuseinnenraum (14) derart angeordnet ist, dass durch einen Vorgang mit spanender Bearbeitung entstehende, und in den ersten Werkzeugständergehäuseinnenraum (14) eintretende Späne, durch das Spanleitsystem abgelenkt werden.

## Beschreibung

Die Erfindung betrifft eine Standwerkzeugmaschine, insbesondere eine Kernbohrmaschine.

In der spanenden Bearbeitung von Werkstücken sind Metallspäne bzw. Metallstaub ein allgegenwärtiges Nebenprodukt, das sich während verschiedener Phasen des Bearbeitungsprozesses bildet. Diese kleinen, scharfkantigen Metallfragmente entstehen zwangsläufig, wenn Material von einem Werkstück, beispielsweise durch eine Standwerkzeugmaschine, abgetragen wird. Bei unzureichender Kontrolle und Prävention kann das eine Quelle potenzieller Probleme darstellen. Insbesondere kann es kritisch sein, wenn die freifliegenden Späne in den Innenraum von Werkzeugmaschinen bzw. Standwerkzeugmaschinen gelangen.

Die Auswirkungen dieser freifliegenden Späne bzw. Metallpartikel in der Nähe kritischer Komponenten von Maschinen sind äußerst vielschichtig. Sie können unmittelbare Produktionsstörungen auslösen, indem sie die Bewegung der Werkzeugmaschinenteile behindern oder Beschädigungen an den bearbeiteten Werkstücken verursachen.

Darüber hinaus sind die langfristigen Auswirkungen von freifliegenden Spänen auf die Standwerkzeugmaschinen selbst von erheblicher Bedeutung. Kleine Metallfragmente bzw. Metallpartikel können in Maschinenkomponenten eindringen, was zu vorzeitigem Verschleiß und Schäden führen kann. Die Mechanik und Elektronik von Maschinen sind dabei empfindlich und können durch die Präsenz von Spänen beeinträchtigt werden.

Insbesondere in Standwerkzeugmaschinen, die für präzise Bearbeitungen von Werkstücken unerlässlich sind, wird das Problem freifliegender Späne verstärkt. Diese Maschinen zeichnen sich durch hohe Geschwindigkeiten und Genauigkeitsanforderungen aus. Die Späne können in die Führungssysteme, Lager oder Elektronik eindringen und sowohl die mechanische Präzision als auch die elektronische Steuerung beeinträchtigen. Die Gewährleistung der optimalen Leistung von Standwerkzeugmaschinen ist von entscheidender Bedeutung, da sie die Grundlage für qualitativ hochwertige Fertigungsprozesse und Produkte darstellen.

Es besteht daher ein Bedarf für Maßnahmen zur Reduzierung oder Vermeidung von Spänen in der Nähe kritischer Komponenten in einem Maschinengehäuseinnenraum einer Standwerkzeugmaschine.

Die Erfindung löst diese Aufgabe durch eine Standwerkzeugmaschine zur spanenden Bearbeitung gemäß Anspruch 1. Bevorzugte Ausgestaltungen der Erfindung sind Gegenstände der abhängigen Ansprüche und ergeben sich aus der Beschreibung der Erfindung und aus den Figuren.

Der Vorteil der Erfindung liegt darin, dass die Standwerkzeugmaschine ein Spanleitsystem umfasst, welches eine effektive Methode zur Kontrolle der Späne bietet. Indem mindestens ein Magnet so positioniert ist, dass er Späne ablenkt, insbesondere anzieht, wird verhindert, dass diese sich unkontrolliert im Maschineninneren ausbreiten. Dieser Prozess ist von besonderer Bedeutung, da er nicht nur die Sicherheit und Stabilität des Arbeitsprozesses gewährleistet, sondern auch eine Vielzahl von Vorteilen mit sich bringt. Das Spanleitsystem weist vorzugsweise mindestens eine Spanführungskomponente auf, insbesondere mindestens eine im Werkzeugständergehäuseinnenraum angeordnete Wandkomponente, eine Ablenkblende, einen Führungskanal.

Erfindungsgemäß weist die Standwerkzeugmaschine zur spanenden Bearbeitung, insbesondere Kernbohrmaschine, einen Werkzeugständer mit einem ersten Werkzeugständergehäuseinnenraum auf.

Ferner weist die Standwerkzeugmaschine, insbesondere das Spanleitsystem, mindestens einen oder genau einen Magneten auf, wobei der Magnet in dem ersten Werkzeugständergehäuseinnenraum derart angeordnet ist, dass durch einen Vorgang mit spanender Bearbeitung induzierte und in den Werkzeugständergehäuseinnenraum eintretende Späne durch das von dem Magneten induzierte Magnetfeld abgelenkt werden.

Eine Standwerkzeugmaschine im Sinne der Erfindung ist eine industrielle Maschine, die in der Fertigungs- und Metallverarbeitungsindustrie verwendet wird. Maschinen, die im Gegensatz zu portabel oder beweglich bzw. handgehalten verwendeten Werkzeugen zum Zwecke ihres Einsatzes in einer festen Position aufgestellt sind, werden als "Stand" oder "stationäre" Werkzeugmaschinen bezeichnet.

Standwerkzeugmaschinen werden für eine Vielzahl von Bearbeitungs- und Fertigungsprozessen eingesetzt, darunter Drehen, Fräsen, Bohren, Schleifen, Sägen und mehr. Sie ermöglichen die präzise Entfernung von Material von Werkstücken, um gewünschte Formen, Abmessungen und Oberflächenqualitäten zu erzielen.

Standwerkzeugmaschinen sind in der Regel hochspezialisierte und leistungsfähige Geräte, die für die Herstellung von Präzisionsteilen in großen Mengen oder für kundenspezifische Einzelanfertigungen verwendet werden.

Die Positionierung einer Standwerkzeugmaschine im Fertigungsprozess an einer Basis oder einem Tisch, kann kraftschlüssig durch einen Magneten oder durch anderweitige Befestigungsmittel wie Schrauben oder Zwingen erfolgen.

Spanende Bearbeitung im Sinne der Erfindung ist ein Prozess der Fertigungsindustrie, bei dem Material von einem Werkstück durch das Entfernen in Form von Spänen oder Schichten abgetragen wird. Dieser Materialabtrag erfolgt typischerweise durch den Einsatz von Werkzeugen wie Drehmaschinen, Fräsmaschinen, Bohrmaschinen, Schleifmaschinen, Sägemaschinen und anderen Werkzeugmaschinen.

Die spanende Bearbeitung dient dazu, Werkstücke in die gewünschte Form, Größe und Oberflächengüte zu bringen. Dies kann das Entfernen von überschüssigem Material zur Herstellung von Präzisionsteilen oder die Verbesserung der Oberflächenqualität für ästhetische oder funktionale Zwecke umfassen.

Der Prozess erfolgt oft in mehreren Schritten, wobei das Werkzeug Schichten des Materials in Form von Spänen entfernt. Diese Späne sind kleine Metallfragmente, Metallpartikel oder Schichten, die während des Bearbeitungsprozesses entstehen. Die spanende Bearbeitung erfordert Präzision und sorgfältige Steuerung, um die gewünschten Ergebnisse zu erzielen.

Eine Kernbohrmaschine im Sinne der Erfindung, auch als Kernbohrmaschine oder Kernbohrgerät bezeichnet, ist eine spezialisierte Werkzeugmaschine. Ihr Hauptzweck besteht darin, präzise kreisförmige Vertiefungen oder Kerne in Werkstücken zu bohren, während das umgebende Material intakt bleibt. Dies ermöglicht das Erstellen von sauberen und genauen Öffnungen ohne Beschädigungen oder Grate am Rand.

Ein Werkzeugständer zum Halten einer Standwerkzeugmaschine im Sinne der Erfindung ist eine Vorrichtung, die dazu dient, Standwerkzeugmaschinen sicher und stabil zu positionieren. Diese Struktur dient dazu, die Maschine während des Betriebs fest zu verankern und eine optimale Arbeitsumgebung zu schaffen. Zu den wichtigsten Merkmalen gehören Stabilität und Sicherheit, da der Werkzeugständer eine feste Plattform für die Standwerkzeugmaschine bietet. Dies gewährleistet, dass die Maschine während des Betriebs nicht wackelt oder Vibrationen erzeugt, was für präzise Bearbeitungen von entscheidender Bedeutung ist. Werkzeugständer können mit einem Magnetfuß ausgestattet sein, um einen sicheren Halt zu ermöglichen.

In einigen Fällen sind Werkzeugständer auch mobil, was die Beweglichkeit der Standwerkzeugmaschine erhöhen kann, wenn dies erforderlich ist. Sie tragen dazu bei, den verfügbaren Arbeitsraum zu optimieren und einen effizienten und sicheren Betrieb zu gewährleisten. Insgesamt spielt der Werkzeugständer eine entscheidende Rolle bei der Schaffung einer stabilen und sicheren Arbeitsumgebung für Standwerkzeugmaschinen, was für präzise Bearbeitungen und Qualitätskontrollen von großer Bedeutung ist.

Der Werkzeugständergehäuseinnenraum im Sinne der Erfindung ist ein Teil des Werkzeugständers, der verschiedene Komponenten wie beispielsweise elektronische Ausrüstung enthält.

Ein Magnet im Sinne der Erfindung ist ein physikalisches Objekt oder Material, das die Fähigkeit besitzt, ferromagnetische oder magnetisierbare Substanzen anzuziehen oder abzustoßen. Magneten haben die Fähigkeit, ein Magnetfeld um sich herum zu erzeugen, das auf andere Magneten oder magnetische Materialien wirkt.

In dem ersten Werkzeugständergehäuseinnenraum ist mindestens ein Magnet so platziert und angeordnet, dass er eine wichtige Funktion bei Vorgängen mit spanender Bearbeitung erfüllt. Das Magnetfeld, das von diesem mindestens einen, vorzugsweise mehreren Magneten, insbesondere genau einem, zwei, drei, vier oder bis zu zehn Magneten erzeugt wird, dient dazu, Späne, die während des Vorgangs entstehen und in den Werkzeugständergehäuseinnenraum gelangen, gezielt zu leiten bzw. abzulenken.

Während des Vorgangs mit spanender Bearbeitung können metallische Späne oder Partikel erzeugt werden. Diese könnten, wenn sie sich ungehindert im Gehäuseinneren ausbreiten, potenziell Schäden verursachen oder die Funktionalität von Werkzeugen oder elektronischen Komponenten beeinträchtigen.

Der Magnet im Werkzeugständergehäuseinnenraum wirkt diesem Problem durch die Wirkung seines Magnetfeldes entgegen. Dieses Magnetfeld übt eine Anziehungskraft auf die magnetischen Späne aus und lenkt sie in eine bestimmte Richtung ab. Dadurch werden die Späne von den empfindlichen Bereichen des Gehäuses, den Werkzeugen oder den elektronischen Komponenten weggeführt, wo sie andernfalls Schaden anrichten könnten.

Insgesamt trägt die Anordnung des Magneten im Werkzeugständergehäuseinnenraum dazu bei, die Sicherheit, Effizienz und Funktionalität des Bearbeitungsvorgangs und der darin enthaltenen Werkzeuge und elektronischen Ausrüstung zu verbessern, indem sie die Kontrolle über freifliegende Späne ermöglicht.

Vorteilhafterweise weist die Standwerkzeugmaschine ferner einen Motor und ein Motorkabel auf. Das Motorkabel des Motors verläuft zum ersten Werkzeugständergehäuseinnenraum entlang eines Führungskanals.

Ein Motor im Sinne der Erfindung ist eine elektrische oder pneumatische Antriebseinheit, die entwickelt wurde, um Vorgänge mit spanender Bearbeitung in verschiedenen Materialien durchzuführen. Diese Antriebseinheiten bieten die erforderliche Leistung und Präzision für beispielsweise das Erstellen von Löchern in Werkstücken oder anderer spanenden Bearbeitung.

Ein Motorkabel im Sinne der Erfindung ist ein Bestandteil der Antriebseinheit oder einer Maschine zur spanenden Bearbeitung. Es handelt sich um das elektrische Kabel, das die Antriebseinheit mit der Stromversorgung verbindet und die Übertragung von elektrischer Energie ermöglicht.

Das Motorkabel verläuft von der Antriebseinheit zum ersten Werkzeugständergehäuseinnenraum entlang eines speziell dafür vorgesehenen Führungskanals. Dieser Führungskanal dient dazu, das Kabel sicher zu führen und zu schützen, während des Materialabtragungsprozesses.

Vorteilhafterweise weist die Standwerkzeugmaschine ferner einen zweiten Werkzeugständergehäuseinnenraum mit einer darin angeordneten Elektronikeinheit auf. Der erste und zweite Werkzeugständergehäuseinnenraum sind vorzugsweise durch eine Trennwand getrennt. Der zweite Werkzeugständergehäuseinnenraum ist mit dem ersten Werkzeugständergehäuseinnenraum vorzugsweise über die Trennwand verbunden, wobei die Trennwand mindestens eine Öffnung aufweist, sodass mittels dem Motorkabel eine Verbindung von Motor zu Elektronikeinheit besteht.

Vorteilhafterweise ist der Werkzeugständergehäuseinnenraum der Standwerkzeugmaschine durch eine Trennwand in zwei Bereiche geteilt. In einem zweiten Innenraum des Werkzeugständergehäuses ist vorzugsweise die Elektronikeinheit angeordnet. Diese Elektronikeinheit kann an der Trennwand befestigt sein. Im ersten Innenraum des Werkzeugständergehäuses ist vorzugsweise das Motorkabel schlaufenartig beweglich angeordnet. Die Länge der Schlaufe des Motorkabels im ersten Innenraum ist vorzugsweise abhängig von der Position des Motors. Im Arbeitsprozess, bewegt sich der Motor von einer Ausgangsposition vertikal in Richtung des Werkstücks in eine Endposition, um mittels des Werkzeugs die Bearbeitung des Werkstücks durchzuführen. In der Ausgangsposition befindet sich vorzugsweise der größte Teil des Motorkabels außerhalb des zweiten Innenraums, wo hingegen in der Endposition der größte Teil des Motorkabels im zweiten Innenraum des Werkzeugständergehäuses befindet.

Das Motorkabel reicht vorzugsweise mit seinem ersten Ende durch eine Öffnung in der Trennwand in den zweiten Innenraum des Werkzeugständergehäuses und ist mit der Spannungsquelle und der Elektronikeinheit verbunden. Das zweite Ende des Motorkabels verläuft vorzugsweise durch den Führungskanal und ist mit dem Motor verbunden.

Die Trennwand enthält vorzugsweise Öffnungen, die Fluidverbindungen zwischen dem ersten und dem zweiten Innenraum des Werkzeugständergehäuses bilden. Dadurch kann beispielsweise durch Luftströmungen die Elektronikeinheit gekühlt werden.

Eine Elektronikeinheit im Sinne der Erfindung bezieht sich auf eine Komponente oder ein Modul, das elektronische Funktionen und Aufgaben der Standwerkzeugmaschine ausführt. Elektronikeinheiten können in einer Vielzahl von Anwendungen eingesetzt werden und dienen dazu, elektronische Signale zu verarbeiten, zu steuern oder zu überwachen.

Eine Trennwand im Sinne der Erfindung ist eine Struktur oder ein Bauelement, das dazu dient, einen Raum in separate Abschnitte oder Bereiche zu unterteilen. Die Trennwand kann aus verschiedenen Werkstoffen gebildet sein. Die Trennwand kann aus Kunststoffen, metallischen und oder magnetische Werkstoffe oder aus einer Kombination dieser gebildet sein. Dieses Konstrukt, während es die Integration von Elektronik in den Arbeitsprozess ermöglicht, birgt das Risiko, dass bei Vorgängen mit spanender Bearbeitung Späne oder Partikel in den zweiten Werkzeugständergehäuseinnenraum gelangen könnten, wo sich die Elektronikeinheit befindet. Diese Späne könnten potenziell die Funktion der Elektronikeinheit beeinträchtigen oder Schäden verursachen.

Die Öffnungen in der Trennwand können eine potenzielle Eintrittsöffnung für Späne darstellen. Wenn Späne in den ersten Werkzeugständergehäuseinnenraum gelangen und die Elektronikeinheit über die Öffnungen erreichen, besteht die Gefahr von Störungen, Fehlfunktionen oder sogar dauerhaften Schäden an den elektronischen Komponenten.

Ein Magnet wird im Bereich der Öffnungen der Trennwand zwischen dem zweiten Werkzeugständergehäuseinnenraum, der die Elektronikeinheit enthält, und dem ersten Werkzeugständergehäuseinnenraum platziert. Dieser Magnet erzeugt ein Magnetfeld, das auf die Metallspäne einwirkt, die während des Vorgangs mit spanender Bearbeitung entstehen.

Die Metallspäne, die in die Nähe der Öffnungen der Trennwand gelangen, werden durch das Magnetfeld angezogen und von der Öffnung weggeführt. Dies verhindert, dass die Späne in den zweiten Werkzeugständergehäuseinnenraum gelangen, in dem sich die empfindliche Elektronikeinheit befindet.

Auf diese Weise wird die Elektronikeinheit vor den potenziellen negativen Auswirkungen von Spänen geschützt, während gleichzeitig die erforderliche Verbindung zwischen dem Motor und der Elektronikeinheit aufrechterhalten wird.

Vorteilhafterweise ist der Magnet an der Trennwand befestigt. Der Vorteil, den Magnet an der Trennwand zwischen dem ersten Werkzeugständergehäuseinnenraum und dem zweiten Werkzeugständergehäuseinnenraum zu befestigen, besteht darin, dass er einen effektiven Schutz vor Metallspänen bietet, während er gleichzeitig das Vorhandensein von Öffnungen zwischen dem Motor und der Elektronikeinheit aufrechterhält.

Vorteilhafterweise ist der erste Werkzeugständergehäuseinnenraum teilweise durch einen abnehmbaren Gehäusedeckel des Werkzeuggehäuses gebildet. Das Werkzeuggehäuse oder der Gehäusedeckel kann eine öffenbare, insbesondere abnehmbare, Verriegelungsklappe aufweisen. Die Verriegelungsklappe kann auch ein Kompartiment im Werkzeugständergehäuseinnenraum verschließen, wobei in dem Kompartiment der mindestens eine Magnet angeordnet sein kann.

Eine Verriegelungsklappe ist eine bewegliche Abdeckung, die eingerichtet ist, um einfach geöffnet und geschlossen werden zu können, während sie gleichzeitig eine Verriegelungsfunktion bietet, um den Zugang zu einem bestimmten Bereich zu steuern oder zu begrenzen. Der Gehäusedeckel und/oder die Verriegelungsklappe ermöglicht es, den Innenraum des ersten Werkzeugständergehäuseinnenraums bei Bedarf zu erreichen. Dies kann besonders nützlich sein, um Wartungsarbeiten durchzuführen, Reparaturen vorzunehmen oder Komponenten auszutauschen. Die Verriegelungsfunktion der Klappe bietet ferner Sicherheit, indem sie den unbefugten Zugang zum Inneren des Gehäuses einschränkt. Die Möglichkeit, den Gehäusedeckel bzw. die Verriegelungsklappe zu öffnen, erleichtert ferner die Wartung und Instandhaltung von Komponenten im Inneren des Gehäuses.

Vorteilhafterweise ist der Magnet nach Entfernen des Gehäusedeckels und/oder der Verriegelungsklappe zugänglich. Metallpartikel, die am Magneten haften, können einfach entfernt werden. Zusätzlich ist der Magnet reversibel entfernbar. Der Vorteil, dass der Magnet nach Entfernen des Gehäusedeckels bzw. der Verriegelungsklappe gereinigt werden kann bzw. reversibel entfernbar ist, liegt in der Flexibilität und Anpassungsfähigkeit dieser Konfiguration. Diese Eigenschaft ermöglicht eine einfache Modifikation des Systems, ohne dass größere strukturelle Änderungen erforderlich sind. Alternativ kann der Magnet auch an dem Gehäusedeckel oder der Verriegelungsklappe angebracht sein.

Wenn Wartungsarbeiten, Reparaturen oder Anpassungen im Inneren des ersten Werkzeugständergehäuseinnenraums notwendig sind, kann der Gehäusedeckel oder die Verriegelungsklappe unkompliziert entfernt werden, um Zugang zu gewähren. Dies erleichtert die Instandhaltung und Reparatur von Komponenten und minimiert die Stillstandzeiten des Systems.

Vorteilhafterweise verläuft das Motorkabel durch eine, insbesondere langlochartige Öffnung des Werkzeugständergehäuseinnenraums, welche einen Teil des Führungskanals bildet. Verläuft das Motorkabel durch eine langlochartige Öffnung, die einen Teil des Führungskanals bildet, bietet dies den Vorteil eines sicheren und geschützten Kabelverlaufs. Diese Konfiguration trägt zur Sicherheit und Effizienz des Betriebs bei, indem sie das Motorkabel vor Beschädigungen, Verwicklungen oder Störungen schützt. Das Kabel wird geordnet geführt, was Unfälle verhindert, die Lebensdauer des Kabels verlängert und die Effizienz der Arbeitsabläufe steigert. Der Führungskanal dient insbesondere dazu, das Motorkabel in Richtung des Kabelverlaufs beweglich zu führen. Typischer Weise sind die durch den Motor, ein damit verbundenes Getriebe, eine Werkzeugaufnahme und ein Werkzeug gebildete Einheit bei einer Standwerkzeugmaschine vertikal, oder in einem nahezu vertikalen Winkel, gegenüber dem Werkzeugständer beweglich, insbesondere indem die Einheit mittels eines Längsführungssystems, insbesondere Schienensystems, vertikal am Werkzeugständer verschiebbar angeordnet ist.

Insbesondere in dem Fall, dass die Standwerkzeugmaschine eine Bohrmaschine oder eine Kernbohrmaschine ist, wird der Motor auch als Bohrmotor und das Motorkabel auch als Bohrmotorkabel bezeichnet.

Vorteilhafterweise weist der Führungskanal eine, an ein Filmscharnier angebundene Abdeckung auf. Wenn der Führungskanal eine Abdeckung aufweist, die an ein Filmscharnier angebunden ist, bietet dies den Vorteil einer verbesserten Zugänglichkeit und Wartungsfreundlichkeit des Systems. Die Abdeckung kann leicht geöffnet werden, um Zugang zum Kabel und anderen Komponenten im Inneren des Führungskanals zu ermöglichen, ohne dass die Abdeckung vollständig entfernt werden muss. Dies erleichtert die schnelle Wartung oder Reparatur, minimiert die Stillstandzeiten und erhöht die Effizienz des Systems.

Das Filmscharnier gewährleistet einen sicheren Verschluss der Abdeckung, wenn sie nicht geöffnet ist, und schützt das Kabel vor äußeren Einflüssen wie Schmutz, Feuchtigkeit oder mechanischem Verschleiß. Dies verlängert die Lebensdauer des Kabels und reduziert die Wartungskosten.

Darüber hinaus trägt die Abdeckung dazu bei, den Arbeitsbereich sauber und aufgeräumt zu halten, da sie das Kabel ordentlich abdeckt und Unfälle durch herumliegende Kabel verhindert. Die Vermeidung von Verwicklungen oder Störungen durch externe Einflüsse gewährleistet einen reibungslosen Betrieb des Systems.

Vorteilhafterweise ist der Magnet in einer zylinderförmigen Lagerung angeordnet und reicht in den ersten Werkzeugständergehäuseinnenraum hinein. Der Vorteil, wenn der Magnet in einer zylinderförmigen Lagerung angeordnet ist und in den ersten Werkzeugständergehäuseinnenraum hineinreicht, liegt darin, dass dies eine gezielte und effiziente Ablenkung von Spänen ermöglicht, während gleichzeitig der verfügbare Raum im Werkzeugständergehäuseinnenraum optimal genutzt wird.

Durch die zylinderförmige Lagerung kann der Magnet präzise positioniert werden, um Späne, die während des Vorgangs mit spanender Bearbeitung erzeugt werden, gezielt abzulenken. Dies ist besonders wichtig, um sicherzustellen, dass die Späne von empfindlichen Komponenten ferngehalten werden und keine Störungen oder Schäden verursachen.

Die optimierte Raumnutzung ist ein weiterer Vorteil dieser Anordnung. Da der Magnet in einer zylinderförmigen Lagerung untergebracht ist, wird der verfügbare Raum im Werkzeugständergehäuseinnenraum effizient genutzt, ohne Platz zu verschwenden. Dies ist besonders nützlich, wenn in diesem Raum noch andere Komponenten oder Mechanismen untergebracht werden müssen.

Darüber hinaus bietet diese Anordnung Schutz für empfindliche Komponenten im Inneren des Werkzeugständergehäuseinnenraums. Der Magnet kann dazu beitragen, diese Komponenten vor Spänen und metallischen, magnetischen Partikeln zu schützen, was die Langlebigkeit und die ordnungsgemäße Funktion dieser Teile gewährleistet.

Vorteilhafterweise weist der erste Werkzeugständergehäuseinnenraum einen oberen Bereich und einen unteren Bereich auf, die durch eine gedachte horizontale Trennebene getrennt sind. Die Öffnung für das Motorkabel ist vorzugsweise im oberen Bereich angeordnet, der Magnet ist vorzugsweise im unteren Bereich angeordnet. Von oben durch die Öffnung eindringende Späne werden, der Gravitation folgend, von oben nach unten fallen und in den Anziehungsbereich des Magneten geraten, der die Späne dann sichert. Vorzugsweise weist der untere Bereich einen bodenseitigen Bodenbereich auf, der die untere Hälfte bzw. das untere Viertel des unteren Bereichs einnimmt. Vorzugsweise ist der Magnet in dem Bodenbereich angeordnet, was besonders wirksam ist, da sich Späne im Bodenbereich sammeln.

Vorteilhafterweise weist der erste Werkzeugständergehäuseinnenraum einen oberen Bereich und eine relativ zu einer Achse darunter liegenden unteren Bereich auf. Relativ zu der Achse unterhalb im Sinne der Erfindung bedeutet, dass der Bereich zumindest wesentlich entlang einer Achse entlang des Kraftvektors der Schwerkraft unterhalb angeordnet ist.

Vorteilhafterweise ist der Magnet im unteren Bereich angeordnet.

Vorteilhafterweise ist der Magnet ein Permanentmagnet. Der Vorteil, wenn der Magnet in diesem Zusammenhang ein Permanentmagnet ist und in den ersten Werkzeugständergehäuseinnenraum hineinreicht, besteht darin, dass dieser Magnet eine dauerhafte und zuverlässige Lösung bietet, ohne auf eine externe Stromversorgung angewiesen zu sein. Permanentmagneten im Sinne der Erfindung erzeugen kontinuierlich ein Magnetfeld, das Späne effizient ablenkt, ohne dass Strom zugeführt werden muss. Dies führt zu einer zuverlässigen und kosteneffizienten Methode, um den Innenraum des Werkzeugständergehäuses zu schützen und empfindliche Komponenten vor metallischen Partikeln zu bewahren. Da keine externe Energiequelle erforderlich ist, entfallen auch Wartungs- und Betriebskosten im Zusammenhang mit der Stromversorgung, was die Gesamtbetriebskosten reduziert. Dies ist insbesondere in industriellen Anwendungen von Vorteil, in denen eine zuverlässige und kosteneffiziente Lösung für den Schutz von elektronischen Komponenten vor magnetischen Partikeln gefragt ist.

Vorteilhafterweise ist der Magnet ein Elektromagnet. Der Vorteil, wenn der Magnet in diesem Zusammenhang ein Elektromagnet ist und in den ersten Werkzeugständergehäuseinnenraum hineinreicht, entspricht dem Vorteil eines Permanentmagneten in Bezug auf die gezielte und effiziente Ablenkung von Spänen sowie die optimierte Raumnutzung. Elektromagneten bieten jedoch zusätzliche Vorteile aufgrund ihrer Steuerbarkeit. Ein Elektromagnet im Sinne der Erfindung kann das Magnetfeld nach Bedarf ein- und ausschalten, was eine präzise Steuerung eines Spanleitsystems ermöglicht. Diese Anpassungsfähigkeit ist besonders nützlich, um den Schutz empfindlicher Komponenten zu optimieren und die Effizienz des Systems zu steigern.

Die Möglichkeit, den Elektromagneten in einen Energiesparmodus zu versetzen, wenn ein Spanleitsystem nicht erforderlich ist, trägt zur Reduzierung des Energieverbrauchs und der Betriebskosten bei. Dies macht Elektromagneten zu einer effizienten und kostengünstigen Lösung.

Vorteilhafterweise ist der Magnet ein zwei-poliger Neodym-Magnet mit einem Durchmesser von mehr als 5 mm, vorzugsweise mehr als 10 mm, weiter bevorzugt mehr als 20 mm.

Vorteilhafterweise ist der Magnet über einen Schnappmechanismus, formschlüssig oder eine Klebeverbindung, stoffschlüssig oder magnetisch, oder mittels eines weiteren Magneten oder eine Kombination dieser Befestigungsmethoden angeordnet.

Diese Befestigungsmethoden ermöglichen eine unkomplizierte Installation des Magneten im Werkzeugständergehäuseinnenraum. Dies spart Zeit und Aufwand bei der Einrichtung des Systems und ermöglicht eine schnelle Inbetriebnahme.

Die Modularität, die durch Schnappmechanismen, Klebebefestigungen oder andere Magneten geboten wird, ermöglicht es, den Magnet leicht zu entfernen oder auszutauschen, wenn dies erforderlich ist. Dies erhöht die Flexibilität des Systems und erleichtert Anpassungen entsprechend den spezifischen Anforderungen.

Durch die Verwendung dieser Befestigungsmethoden werden keine dauerhaften Veränderungen oder Beschädigungen am Werkzeugständergehäuseinnenraum verursacht. Dies ist besonders wichtig, wenn Rückbaufähigkeit oder die Möglichkeit der Systemanpassung gewünscht werden.

Die Wartungsfreundlichkeit wird verbessert, da der Magnet bei Bedarf leicht gereinigt, entfernt und gewartet werden kann, ohne dass dies mit erheblichem Aufwand verbunden ist. Dies minimiert Ausfallzeiten und erhöht die Effizienz des Systems.

Die Anpassbarkeit der Befestigungsmethode ermöglicht es, die am besten geeignete Methode für die spezifische Anwendung zu wählen. Dies stellt sicher, dass der Magnet sicher und stabil im Werkzeugständergehäuseinnenraum positioniert ist.

Insgesamt bieten Schnappmechanismen, Klebebefestigungen oder andere Magneten eine praktische und vielseitige Lösung für die Befestigung des Magneten im Werkzeugständergehäuseinnenraum, die zur Flexibilität, Wartungsfreundlichkeit und Effizienz des Systems beiträgt.

Im Folgenden wird die Erfindung an mehreren in den Zeichnungen dargestellten Ausführungsbeispielen näher erläutert; es zeigen:
Fig. 1a eine perspektivische Ansicht einer Standwerkzeugmaschine;
Fig. 1b eine perspektivische Ansicht der Standwerkzeugmaschine aus Fig. 1a;
Fig. 2 eine perspektivische Teilansicht der Standwerkzeugmaschine aus Fig. 1a;
Fig. 3 eine perspektivische Teilansicht der Standwerkzeugmaschine gemäß Fig.2 mit transparent dargestellter Trennwand;
Fig. 4 eine vergrößerte perspektivische Teilansicht gemäß Fig. 3; und
Fig. 5 eine weitere perspektivische Ansicht der Standwerkezugmaschine aus Fig. 1a.

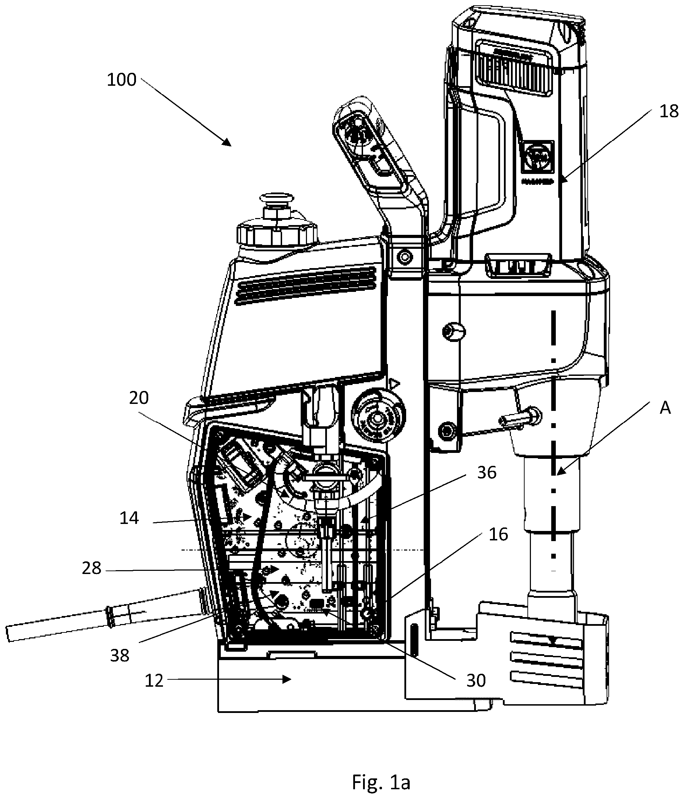

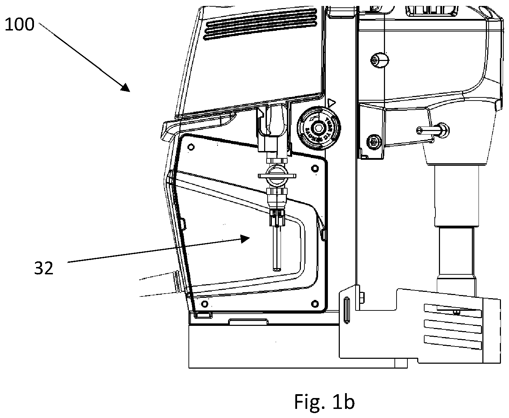

Fig. 1a zeigt eine Ansicht einer Standwerkzeugmaschine 100 in Form einer Kernbohrmaschine. Diese Maschine 100 verfügt über einen Werkzeugständer 12, in dem sich ein erster Werkzeugständergehäuseinnenraum 14 befindet, der durch Abnehmen des Gehäusedeckels 32 (Fig. 1b) zugänglich wird. In diesem Inneren 14 ist das einen Magneten 16 beinhaltende Spanleitsystem strategisch platziert, um durch sein induziertes Magnetfeld die bei Bohrvorgängen erzeugten Späne, die in den Werkzeugständergehäuseinnenraum 14 eintreten, zu lenken.

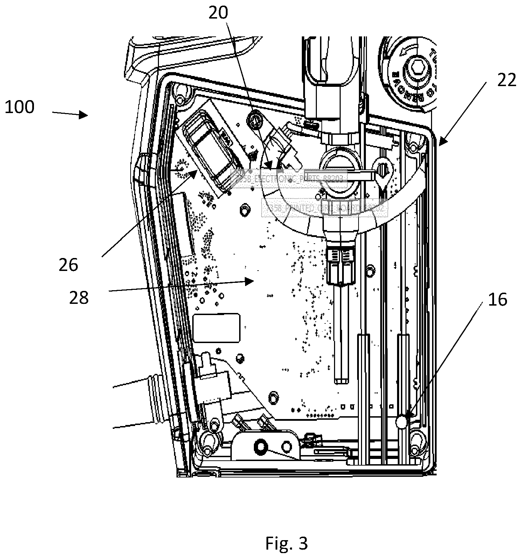

Die Standwerkzeugmaschine 100 ist zudem ausgestattet mit einem Motor 18, welcher in dem gezeigten Ausführungsbeispiel als Bohrmotor 18 ausgeführt ist, und einem Motorkabel 20, welches in dem gezeigten Ausführungsbeispiel als Bohrmotorkabel 20 ausgeführt ist. Dieses Kabel verläuft entlang eines Führungskanals 22 (Fig. 3) und erstreckt sich vom Bohrmotor 18 über den ersten 14 bis hin zum zweiten Werkzeugständergehäuseinnenraum 24. Durch diesen dem Spanleitsystem zugeordneten Führungskanal 22 wird der Zugang von Spänen in den ersten Werkzeugständergehäuseinnenraum 14 beschränkt und die Richtung der eintretenden Späne wird beeinflusst.

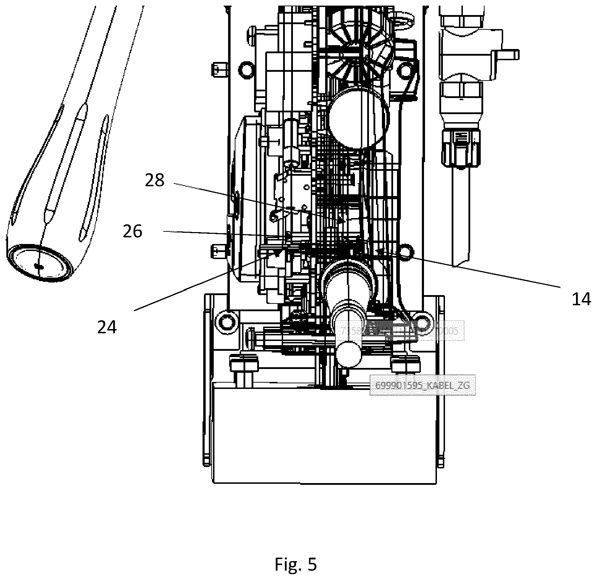

Des Weiteren ist in der gezeigten Standwerkzeugmaschine 100 ein zweiter Werkzeugständergehäuseinnenraum 24 (Fig. 5) vorgesehen, in welchem eine Elektronikeinheit 26 angeordnet ist. Dieser zweite Werkzeugständergehäuseinnenraum 24 ist über eine Trennwand 28 mit dem ersten Werkzeugständergehäuseinnenraum 14 verbunden. Die Trennwand 28 weist ferner mindestens eine Öffnung 30 auf. Die Öffnungen 30 stellen eine Verbindung zwischen dem Bohrmotor 18 und der Elektronikeinheit 26 dar. Insbesondere stellt diese Verbindung eine Fluidverbindung dar, auf dessen Wege ein Metallpartikel in die Nähe bis hin zum Kontakt mit der Elektronikeinheit 26 gelangen kann.

Der Magnet 16 ist in der gezeigten Ausführungsform an der Trennwand 28 befestigt. Der erste Werkzeugständergehäuseinnenraum 14 ist teilweise durch einen abnehmbaren Gehäusedeckel 32 gebildet, siehe Figur 1b, , was die Zugänglichkeit und Wartung dieses Bereichs erleichtert. Der erste Werkzeugständergehäuseinnenraum 14 weist einen oberen Bereich 36 und eine relativ zu einer in Figur 1 strichpunktierten Linie darunter liegenden unteren Bereich 38 auf. Der Magnet 16 ist im gezeigten Ausführungsbeispiel im unteren Bereich 38, insbesondere im Bodenbereich angeordnet.

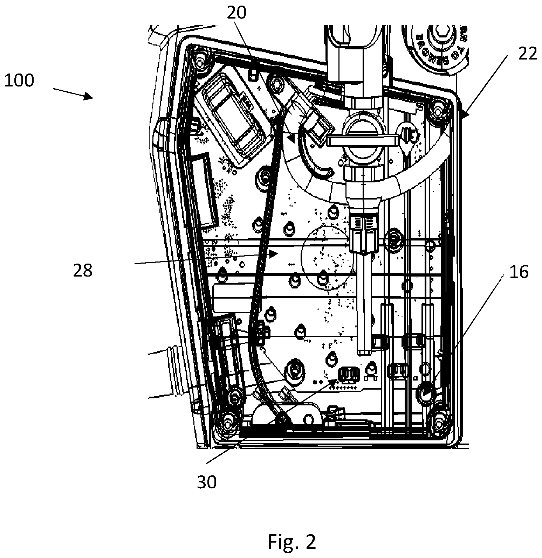

Fig. 2 zeigt eine Teilansicht der Standwerkzeugmaschine 100 aus Fig. 1a, wobei in dieser Teilansicht der Bereich um die Trennwand 28 vergrößert ist. Das Bohrmotorkabel 20 verläuft entlang des Führungskanals 22 und erstreckt sich vom Bohrmotor 18 bis hin zum ersten Werkzeugständergehäuseinnenraum 14. Durch diesen Führungskanal 22 können Metallpartikel bzw. die Späne in beschränktem Maße in den ersten Werkzeugständergehäuseinnenraum 14 gelangen.

Durch eine Höhenverstellung entlang Achse A (Figur 1) kommt es zu einer Bewegung des Bohrmotorkabels 20 innerhalb des ersten Werkzeugständergehäuseinnenraums 14. Durch die Bewegung des Bohrmotorkabels 20 können Metallpartikel, die am Bohrmotorkabel haften bzw. sich im oder im Bereich des Führungskanal 22 befinden in Bewegungsrichtung in den ersten Werkzeugständergehäuseinnenraum 14 gelangen.

Durch die Platzierung des Magneten 16 und dessen induziertes Magnetfeld werden Späne, die in den ersten Innenraum des Werkzeugständergehäuses gelangen, gelenkt und kraftschlüssig im Magnetfeld gehalten.. Hierdurch wird die Anzahl von Metallpartikeln, welche durch Öffnungen 30 durchtreten, verhindert, zumindest reduziert, und kritische Komponenten wie die Elektronikeinheit 26 vor unerwünschtem Kontakt mit diesen Metallpartikeln bzw. Spänen geschützt.

Fig. 3 zeigt eine Teilansicht der Standwerkzeugmaschine 100 gemäß Fig.2 mit transparenter Trennwand 28. Fig. 3 unterscheidet sich somit von Fig. 2 dahingehend, dass die Elektronikeinheit 26 sichtbar ist. Es ist deutlich zu erkennen, wie die Elektronikeinheit 26 in dem zweiten Werkzeuggehäuseinnenraum 24 angeordnet ist. Frei fliegende Späne können somit innerhalb des zweiten Werkzeuggehäuseinnenraums 24 unerwünscht in Kontakt mit der Elektronikeinheit 26 kommen und den Betrieb der Standwerkzeugmaschine 100 nachteilig beeinflussen.

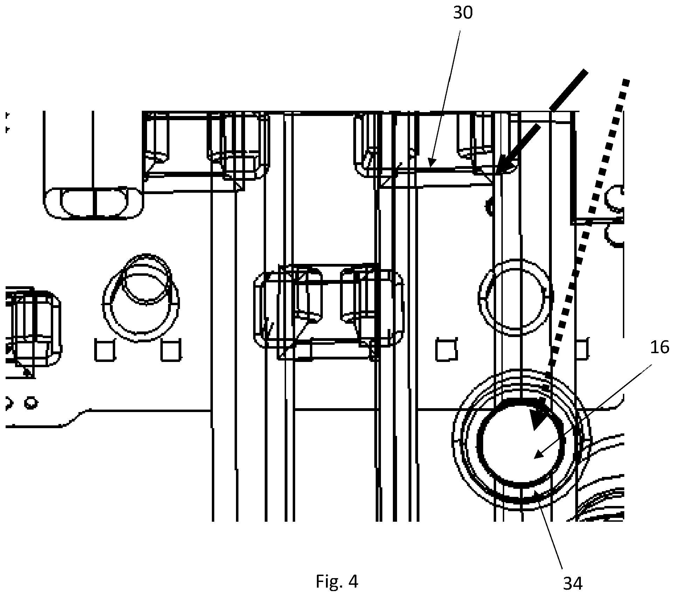

Fig. 4 zeigt eine vergrößerte Teilansicht gemäß Fig. 3. Durch den liniert unterbrochenen Pfeil wird ein potentieller Weg eines Spans durch eine der Öffnungen 30 dargestellt. Gelangt der Span durch eine der Öffnungen 30, kann er in schädlichen Kontakt mit elektronischen Komponenten wie der beschriebenen Elektronikkomponente 26 treten. Durch das Magnetfeld des Magneten 16, der in einer Lagerung 34 angeordnet ist, wird der Span auf eine durch den punktierten Pfeil induzierte Trajektorie abgelenkt und hierdurch daran gehindert über die Öffnungen 30 in den zweiten Werkzeugständergehäuseinnenraum 24 zu gelangen. In dem gezeigten Ausführungsbeispiel ist der der Magnet 16 ein Neodym-Magnet mit einem Durchmesser von 5 mm.

Fig. 5 zeigt eine weitere Ansicht der Standwerkzeugmaschine 100, wobei die Maschine um 90° entlang der Achse A gedreht wurde und wesentliche Komponenten wie die Verriegelungsklappe ausgeblendet sind. Es ist der zweite Werkzeugständergehäuseinnenraum 24 mit einer darin angeordneten Elektronikeinheit 26 zu sehen, wobei der zweite Werkzeugständergehäuseinnenraum 24 mit dem ersten Werkzeugständergehäuseinnenraum 14 über eine Trennwand 28 verbunden ist. Die Trennwand 28 weist dabei mehrere Öffnungen 30 auf, sodass von Bohrmotor 18 (nicht gezeigt) zu Elektronikeinheit 26 eine Verbindung besteht, durch welche ein Span in die Nähe der Elektronikeinheit 26 gelangen kann.

In den ersten Werkzeugständergehäuseinnenraum 14 eintretende Späne werden durch das Spanleitsystem, insbesondere das von dem Magneten 14 induzierte Magnetfeld abgelenkt.

Insgesamt trägt das Spanleitsystem mit seiner Anordnung des Führungskanals 22 und des Magneten 16 mit dessen Magnetfeld im Werkzeugständergehäuseinnenraum 14 somit dazu bei, die Sicherheit, Effizienz und Funktionalität des Bohrvorgangs und der darin enthaltenen Werkzeuge und elektronischen Ausrüstung zu verbessern, indem sie die Einflussnahme auf die Trajektorien freifliegender Späne ermöglicht.

### Bezugszeichenliste

- 100: Standwerkzeugmaschine
- 12: Werkzeugständer
- 14: erster Werkzeugständergehäuseinnenraum
- 16: Magnet
- 18: Bohrmotor
- 20: Bohrmotorkabel
- 22: Führungskanal
- 24: zweiter Werkzeugständergehäuseinnenraum
- 26: Elektronikeinheit
- 28: Trennwand
- 30: Öffnung
- 32: Gehäusedeckel
- 34: Lagerung
- 36: oberen Bereich
- 38: unteren Bereich

## Patentansprüche

1. Standwerkzeugmaschine (100) zur spanenden Bearbeitung, insbesondere Kernbohrmaschine, aufweisend
einen Werkzeugständer (12) mit einem ersten Werkzeugständergehäuseinnenraum (14),
ein Spanleitsystem beinhaltend mindestens einen Magneten (16) und ein von diesem induziertes Magnetfeld, wobei der mindestens eine Magnet (16) in dem ersten Werkzeugständergehäuseinnenraum (14) derart angeordnet ist, dass durch einen Vorgang mit spanender Bearbeitung entstehende, und in den ersten Werkzeugständergehäuseinnenraum (14) eintretende Späne durch das Spanleitsystem abgelenkt werden.

2. Standwerkzeugmaschine (100) nach Anspruch 1, ferner aufweisend,
einen Motor (18),
ein Motorkabel (20),
wobei das Motorkabel (20) vom Motor (18) zum ersten Werkzeugständergehäuseinnenraum (14) entlang eines Führungskanals (22) verläuft, der insbesondere ein Teil des Spanleitsystems ist.

3. Standwerkzeugmaschine (100) nach einem der vorhergehenden Ansprüche, ferner aufweisend
einen zweiten Werkzeugständergehäuseinnenraum (24) mit einer darin angeordneten Elektronikeinheit (26) auf, wobei der zweite Werkzeugständergehäuseinnenraum (24) mit dem ersten Werkzeugständergehäuseinnenraum (14) durch eine Trennwand (28) getrennt ist, wobei die Trennwand (28) mindestens eine Öffnung (30) aufweist, sodass von Motor (18) zu Elektronikeinheit (26) eine Verbindung besteht.

4. Standwerkzeugmaschine (100) nach Anspruch 3,
wobei der Magnet (16) an der Trennwand (28) befestigt ist.

5. Standwerkzeugmaschine (100) nach einem der vorhergehenden Ansprüche,
wobei der erste Werkzeugständergehäuseinnenraum (14) teilweise durch einen abnehmbaren Gehäusedeckel (32) gebildet ist.

6. Standwerkzeugmaschine (100) nach Anspruch 5,
wobei der Magnet (16) nach Entfernen des Gehäusedeckels (32) reversibel entfernbar ist.

7. Standwerkzeugmaschine (100) nach einem der vorhergehenden Ansprüche,
wobei das Bohrmotorkabel (20) durch eine langlochartige Öffnung verläuft, welche einen Teil des Führungskanals (22) bildet.

8. Standwerkzeugmaschine (100) nach einem der vorhergehenden Ansprüche,
wobei der Führungskanal (22) eine, an ein Filmscharnier angebundene Abdeckung aufweist.

9. Standwerkzeugmaschine (100) nach einem der vorhergehenden Ansprüche,
wobei der Magnet (16) in einer zylinderförmigen Lagerung (34) angeordnet ist und in den ersten Werkzeugständergehäuseinnenraum (14) hineinreicht.

10. Standwerkzeugmaschine (100) nach einem der vorhergehenden Ansprüche,
wobei der erste Werkzeugständergehäuseinnenraum (14) einen oberen Bereich (36) und eine relativ zu einer strichpunktieren Linie darunter liegenden unteren Bereich (38) aufweist.

11. Standwerkzeugmaschine (100) nach einem der vorhergehenden Ansprüche,
wobei der Magnet (16) im unteren Bereich (38) angeordnet ist.

12. Standwerkzeugmaschine (100) nach einem der vorhergehenden Ansprüche,
wobei der Magnet (16) ein Permanentmagnet ist.

13. Standwerkzeugmaschine (100) nach einem der vorhergehenden Ansprüche,
wobei der Magnet (16) ein Elektromagnet ist.

14. Standwerkzeugmaschine (100) nach einem der vorhergehenden Ansprüche,
wobei der Magnet (16) ein zwei-poliger Neodym-Magnet mit einem Durchmesser von mehr als 5 mm, vorzugsweise mehr als 10 mm, weiter bevorzugt mehr als 20 mm ist.

15. Standwerkzeugmaschine (100) nach einem der vorhergehenden Ansprüche,
wobei der Magnet (16) über einen Schnappmechanismus formschlüssig, oder eine Klebebefestigung stoffschlüssig oder magnetisch oder mittels eines weiteren Magneten angeordnet ist.

## Geänderte Patentansprüche

### Geänderte Patentansprüche gemäss Regel 137(2) EPÜ.

1. Standwerkzeugmaschine (100) zur spanenden Bearbeitung, insbesondere Kernbohrmaschine, aufweisend
einen Werkzeugständer (12) mit einem ersten Werkzeugständergehäuseinnenraum (14),
ein Spanleitsystem beinhaltend mindestens einen Magneten (16) und ein von diesem induziertes Magnetfeld, wobei der mindestens eine Magnet (16) in dem ersten Werkzeugständergehäuseinnenraum (14) derart angeordnet ist, dass durch einen Vorgang mit spanender Bearbeitung entstehende, und in den ersten Werkzeugständergehäuseinnenraum (14) eintretende Späne durch das Spanleitsystem abgelenkt werden,
einen Motor (18),
einen zweiten Werkzeugständergehäuseinnenraum (24) mit einer darin angeordneten Elektronikeinheit (26), wobei der zweite Werkzeugständergehäuseinnenraum (24) mit dem ersten Werkzeugständergehäuseinnenraum (14) durch eine Trennwand (28) getrennt ist, wobei die Trennwand (28) mindestens eine Öffnung (30) aufweist, sodass von Motor (18) zu Elektronikeinheit (26) eine Verbindung besteht,
wobei der Magnet (16) an der Trennwand (28) befestigt ist.

2. Standwerkzeugmaschine (100) nach Anspruch 1, ferner aufweisend,
ein Motorkabel (20),
wobei das Motorkabel (20) vom Motor (18) zum ersten Werkzeugständergehäuseinnenraum (14) entlang eines Führungskanals (22) verläuft, der insbesondere ein Teil des Spanleitsystems ist.

3. Standwerkzeugmaschine (100) nach einem der vorhergehenden Ansprüche,
wobei der erste Werkzeugständergehäuseinnenraum (14) teilweise durch einen abnehmbaren Gehäusedeckel (32) gebildet ist.

4. Standwerkzeugmaschine (100) nach Anspruch 3,
wobei der Magnet (16) nach Entfernen des Gehäusedeckels (32) reversibel entfernbar ist.

5. Standwerkzeugmaschine (100) nach einem der Ansprüche 2 bis 4,
wobei das Bohrmotorkabel (20) durch eine langlochartige Öffnung verläuft, welche einen Teil des Führungskanals (22) bildet.

6. Standwerkzeugmaschine (100) nach einem der Ansprüche 2 bis 5,
wobei der Führungskanal (22) eine, an ein Filmscharnier angebundene Abdeckung aufweist.

7. Standwerkzeugmaschine (100) nach einem der vorhergehenden Ansprüche,
wobei der Magnet (16) in einer zylinderförmigen Lagerung (34) angeordnet ist und in den ersten Werkzeugständergehäuseinnenraum (14) hineinreicht.

8. Standwerkzeugmaschine (100) nach einem der vorhergehenden Ansprüche,
wobei der erste Werkzeugständergehäuseinnenraum (14) einen oberen Bereich (36) und eine relativ zu einer strichpunktieren Linie darunter liegenden unteren Bereich (38) aufweist.

9. Standwerkzeugmaschine (100) nach einem der vorhergehenden Ansprüche,
wobei der Magnet (16) im unteren Bereich (38) angeordnet ist.

10. Standwerkzeugmaschine (100) nach einem der vorhergehenden Ansprüche,
wobei der Magnet (16) ein Permanentmagnet ist.

11. Standwerkzeugmaschine (100) nach einem der vorhergehenden Ansprüche,
wobei der Magnet (16) ein Elektromagnet ist.

12. Standwerkzeugmaschine (100) nach einem der vorhergehenden Ansprüche,
wobei der Magnet (16) ein zwei-poliger Neodym-Magnet mit einem Durchmesser von mehr als 5 mm, vorzugsweise mehr als 10 mm, weiter bevorzugt mehr als 20 mm ist.

13. Standwerkzeugmaschine (100) nach einem der vorhergehenden Ansprüche,
wobei der Magnet (16) über einen Schnappmechanismus formschlüssig, oder eine Klebebefestigung stoffschlüssig oder magnetisch oder mittels eines weiteren Magneten angeordnet ist.
